# EUROPÄISCHE PATENTSCHRIFT

(11) **EP 3 994 372 B1**
(45) Veröffentlichungstag und Bekanntmachung des Hinweises auf die Patenterteilung: **29.05.2024**
(21) Anmeldenummer: 20733749.4
(22) Anmeldetag: 17.06.2020
(51) Int. Cl.: F16F 9/02, F16F 9/52

(54) **GASDRUCKFEDER**
GAS PRESSURE SPRING
RESSORT À PRESSION DE GAZ

(30) Priorität: 05.07.2019 DE 102019118211
(43) Veröffentlichungstag der Anmeldung: 11.05.2022
(73) Patentinhaber: Stabilus GmbH, 56070 Koblenz (DE)
(72) Erfinder: BURRELL, Joshua, 56283 Nörtershausen (DE); FUHRMANN, Castor, 56761 Brachtendorf (DE); SEIBERT, Karl-Josef, 56332 Alken (DE); SCHILZ, Arnold, 56112 Lahnstein (DE)
(74) Vertreter: Bernsmann, Falk
(86) Internationale Anmeldenummer: PCT/EP2020/066746
(87) Internationale Veröffentlichungsnummer: WO 2021/004739

(56) Entgegenhaltungen:
- WO-A1-2015/135706
- DE-A1-102016 100 344
- KR-B1- 101 538 020
- US-A- 3 804 326

## Beschreibung

### Technisches Gebiet

Die Erfindung betrifft eine Gasdruckfeder mit den Merkmalen des Oberbegriffs des Anspruchs 1.

### Stand der Technik

Im Stand der Technik werden Gasdruckfedern beispielsweise dazu benutzt, um ganz oder teilweise einen Gewichtsausgleich zu Motorhauben, Kofferraumtüren und Hecktüren von Personenkraftwagen, Kombis und Lieferwagen bereitzustellen, um deren einfache Öffnung zu ermöglichen und sie in einer ganz oder teilweise geöffneten Position zu halten. Es ist weiterhin bekannt, dass die Kraftabgabe von Gasdruckfedern deutlich temperaturabhängig ist. Eine bei niedrigen Temperaturen von der Gasdruckfeder erzeugte Kraft kann sehr viel geringer sein als eine bei hohen Temperaturen erzeugte Kraft.

Die Gasdruckfeder muss also so konstruiert sein, dass sie auch bei sehr niedrigen Temperaturen (z.B. bis -30 °C) eine ausreichend hohe Kraft erzeugt, um die Motorhaube, Kofferraumtür, Hecktür oder Ähnliches (im Folgenden: "Last") offenhalten zu können. Gleichzeitig führt diese Anforderung an die Gasdruckfeder dazu, dass bei hohen Temperaturen (z.B. 20-50 °C) eine entsprechend größere Kraft durch die Gasdruckfeder bereitgestellt wird. Dadurch wird es dem Benutzer oder einem motorisierten Antrieb erschwert, die Last gegen die Kraft der Gasdruckfeder wieder zu schließen.

Auch die hohe Variabilität der Kraft mit der Temperatur an sich ist ein Problem für den Benutzer, da er sich beispielsweise an die hohe von ihm aufzubringende Kraft bei hohen Temperaturen (z.B. in den Sommermonaten) gewöhnen kann, und dann bei einer deutlich niedrigeren Temperatur eine zu große Kraft ausübt um die Last zu schließen, wodurch die Last unter Umständen beschädigt werden kann.

Auf Grund der Proportionalwirkung, nach der eine abgesenkte Temperatur den Gasdruck in einem bekannten Volumen senkt, bieten Gasdruckfedern bei niedrigen Temperaturen eine verringerte Hebekraft oder Extensionskraft. Um dieses Problem zu umgehen, ist es beispielsweise aus der Patentanmeldung DE11 2006 000 335 T5 bekannt, ein temperaturausgleichendes Ventil in den Gasdruckfederkörper einzubauen, das je nach Temperatur eine Fluidverbindung zwischen einer Hauptkammer und einer Nebenkammer der Gasdruckfeder zulässt oder nicht. Bei geschlossenem Ventil, beispielsweise bei Temperaturen oberhalb von 4 °C, arbeitet die Gasdruckfeder nur unter Verwendung der Hauptkammer. Die Gasdruckfeder bietet dann eine Kraftabgabe, die auf der in der Hauptkammer enthaltenen Gasmasse und dem Gasvolumen basiert.

Bei niedrigen Temperaturen, beispielsweise unterhalb von 4 °C, öffnet sich das Ventil, wodurch die Gasdruckfeder mit beiden Kammern arbeitet und eine Kraftabgabe liefert, die auf der gesamten Gasmasse und dem gesamten Gasvolumen beider Kammern basiert. Die zusätzliche Nebenkammer bewirkt eine erhöhte Kraftabgabe.

Im Resultat kann damit im Idealfall die Temperaturabhängigkeit der Gasdruckfederkraft reduziert werden, um eine ausreichend große Kraft bei niedrigen Temperaturen bereitzustellen und eine nicht zu große Kraft bei hohen Temperaturen bereitzustellen.

Die temperaturausgleichende Ventilanordnung der DE11 2006 000 335 T5 verwendet ein Ventilelement aus einer Bimetallfeder, die mit einem um einen Ventildurchlassabschnitt herum angeordneten O-Ring zusammenwirkt, um in einer geschlossenen Position der temperaturausgleichenden Ventilanordnung eine Dichtung zu bilden und einen die Kammern verbindenden Fluidpfad durch den Ventildurchlassabschnitt zu verschließen. Bei einer niedrigen Temperatur, federt die Bimetallfeder in eine offene Position, und beide Kammern stellen gemeinsam das wirksame Volumen der Gasdruckfeder bereit.

Es hat sich jedoch herausgestellt, dass zu dieser Lösung in der Praxis eine Optimierung zur weiteren Verbesserung der Zuverlässigkeit der Gasdruckfeder erstrebenswert war.

### Technische Aufgabe

Die Aufgabe der Erfindung ist es, eine Gasdruckfeder mit einer kostengünstig und einfach herzustellenden, temperaturgetriebenen Ventilanordnung bereitzustellen, die einen zuverlässigeren und sichereren Betrieb einer Gasdruckfeder ermöglicht.

### Technische Lösung

Der Gegenstand der vorliegenden Erfindung stellt eine Gasdruckfeder gemäß Anspruch 1 bereit, die die technische Aufgabe löst. Vorteilhafte Ausgestaltungen ergeben sich aus den abhängigen Ansprüchen.

### Beschreibung der Ausführungsarten

Die erfindungsgemäße Gasdruckfeder mit einer temperaturgetriebenen Ventilanordnung ist im Anspruch 1 definiert. Die temperaturgetriebene Ventilanordnung umfasst einen Kanalabschnitt zur fluidleitenden Verbindung von zwei Kammern zur Aufnahme eines Fluides mit einer Durchgangsöffnung für das Fluid und zumindest ein Schaltelement mit einer Öffnungskonfiguration in einem Öffnungs-Temperaturbereich und einer Schließkonfiguration in einem Schließ-Temperaturbereich. Das Schaltelement ist zumindest abschnittsweise temperaturgetrieben entlang einer Bewegungsachse relativ zu dem Kanalabschnitt beweglich, eine Öffnungsnormale der Durchgangsöffnung ist auf das Schaltelement ausgerichtet, und der Kanalabschnitt ist um die Bewegungsachse umlaufend von einer Kanalwand umschlossen. Der Kanalabschnitt ist beispielsweise im Wesentlichen zylindrisch und/oder koaxial zu der Bewegungsachse.

Der Begriff "entlang" bezeichnet im Sinne der Erfindung eine im Wesentlichen parallele Ausrichtung, beispielsweise einen Winkel von 0° bis 10°, insbesondere von 0° bis 5°, vorzugsweise von 0° bis 1°, einschließend. Die Öffnungsnormale der Durchgangsöffnung kann insbesondere entlang der Bewegungsachse ausgerichtet sein.

Die Ventilanordnung umfasst zumindest ein um die Kanalwand umlaufendes Dichtmittel, wobei das Dichtmittel in einer Einbauposition an zumindest einer Dichtfläche der Kanalwand anliegt. Eine Flächennormale der Dichtfläche ist auf das Schaltelement ausgerichtet, und das zumindest eine Dichtmittel wirkt in der Einbauposition mit der zumindest einen Dichtfläche und dem zumindest einen Schaltelement in der Schließkonfiguration dichtend zusammen und verschließt die Durchgangsöffnung. Das zumindest eine Dichtmittel ist in der Einbauposition von dem zumindest einen Schaltelement in der Öffnungskonfiguration entlang der Bewegungsachse beabstandet, sodass ein primärer Fluidpfad die zwei Kammern durch die Durchgangsöffnung und zwischen dem zumindest einen Schaltelement und dem zumindest einen Dichtmittel hindurch fluidleitend verbindet.

Das Dichtmittel kann beispielsweise einen O-Ring umfassen. Das Schaltelement kann beispielsweise eine Bimetallfeder umfassen, wobei insbesondere der O-Ring und die Bimetallfeder in der Schließkonfiguration eine Dichtung bilden können. Die Ventilanordnung mit dem O-Ring und der Bimetallfeder kann beispielsweise so ausgestaltet sein wie die in DE 11 2006 000 335 T5 in den Absätzen [0030] bis [0041] beschriebene TCV-Anordnung mit O-Ring und Bimetallfeder, woraus sich die dort beschriebenen Vorteile ergeben. Die genannten Absätze [0030] bis [0041] der Patentanmeldung DE 11 2006 000 335 T5 sind hier durch Bezugnehme aufgenommen.

Das Dichtmittel kann insbesondere mit dem Schaltelement in der Schließkonfiguration eine, vorzugsweise zur Bewegungsachse koaxial, um die Durchgangsöffnung umlaufende Dichtung bilden.

Die Ventilanordnung umfasst zumindest eine Ausnehmung in der Kanalwand. Eine Projektion der zumindest einen Ausnehmung entlang der Bewegungsachse ist, insbesondere vollständig, von einer Projektion der Dichtfläche entlang der Bewegungsachse umschlossen. Das heißt, die Ausnehmung ragt axial von der Bewegungsachse nach außen nicht über die Dichtfläche hinaus. Vorzugsweise liegt die gesamte Ausnehmung zumindest ebenso nah an der Bewegungsachse wie der der Bewegungsachse nächste Punkt der Dichtfläche. Insbesondere bildet die Ausnehmung keinen die Kammern fluidleitend verbindenden Umgehungspfad durch die Dichtfläche hindurch oder um die von der Dichtfläche und dem Schaltelement in der Schließkonfiguration gebildeten Dichtung herum. Die Ventilanordnung ist somit in der Schließkonfiguration unabhängig von der Ausnehmung zuverlässig geschlossen.

In einer Ausführungsform befindet sich die Ausnehmung bezüglich der Bewegungsachse vollständig radial innerhalb des Dichtmittels in der Einbauposition. So kann sichergestellt werden, dass der sekundäre Fluidpfad in der Schließkonfiguration keine ungewollte Leckage verursacht, da der sekundäre Fluidpfad nur durch eine Bewegung des Dichtmittels aus der Einbauposition heraus freigegeben werden kann.

In einer Betriebsposition des Dichtmittels, in der das Dichtmittel von der zumindest einen Dichtfläche entlang der Bewegungsachse beabstandet ist, verbindet ein sekundärer Fluidpfad die beiden Kammern durch die zumindest eine Ausnehmung fluidleitend miteinander. Wenn sich das Dichtmittel in der Betriebsposition so weit von der Dichtfläche entfernt hat, dass es an dem Schaltelement in Öffnungskonfiguration anliegt, kann dadurch der primäre Fluidpfad verschlossen sein. Dann kann das Fluid auch in der Öffnungskonfiguration nicht über den primären Fluidpfad von einer der Kammern zu der anderen gelangen.

Die Erfinder haben durch Tests an bekannten Gasdruckfedern festgestellt, dass eine Mitbewegung des O-Rings aus seiner vorgesehenen Position mit der Bimetallfeder in den meisten Fällen die Ursache für ein Nichtöffnen der bekannten temperaturgetriebenen Ventilanordnungen bei niedrigen Temperaturen ist. Dadurch bleibt der primäre Fluidpfad zwischen O-Ring und Bimetallfeder verschlossen, da der O-Ring und die Bimetallfeder auch in der Öffnungskonfiguration der Bimetallfeder aneinander anliegen.

Der sekundäre Fluidpfad stellt eine zum primären Fluidpfad alternative fluidleitende Verbindung der beiden Kammern dar. Dadurch öffnet sich die Ventilanordnung auch dann zuverlässig, wenn sich das Dichtmittel in einer den primären Fluidpfad verschließenden Betriebsposition befindet.

Der sekundäre Fluidpfad öffnet sich vorzugsweise nur dann, wenn sich das Schaltelement in der Öffnungskonfiguration befindet, und das Dichtmittel sich aus seiner Einbauposition heraus mit dem Schaltelement bewegt hat. Dadurch wird sichergestellt, dass die Ventilanordnung in der Schließkonfiguration zuverlässig geschlossen bleibt.

Das Dichtmittel kann beispielsweise in der Einbauposition sowohl in einer Axialrichtung entlang der Bewegungsachse als auch in einer Radialrichtung radial zur Bewegungsachse zumindest teilweise an der Kanalwand anliegt. In der Betriebsposition liegt das Dichtmittel beispielsweise nicht in Axialrichtung an der Kanalwand, insbesondere an der Dichtfläche, an.

In zur vorliegenden Erfindung alternativen, nicht erfindungsgemäßen Ausgestaltungen, die eine zuverlässigeres Öffnen der Ventilanordnung in der Öffnungskonfiguration sicherstellen, könnte auf eine Ausnehmung, die einen sekundären Fluidpfad ermöglicht, verzichtet werden. Dazu könnte beispielsweise das Dichtmittel an der Kanalwand befestigt werden. Die Befestigung könnte zu Beispiel formschlüssig entlang der Bewegungsachse sein, insbesondere durch eine Anordnung des Dichtmittels zumindest teilweise in einer Nut in der Kanalwand. Die Befestigung könnte beispielsweise stoffschlüssig sein, insbesondere durch ein Verkleben des Dichtmittels mit der Kanalwand. Eine formschlüssige Befestigung des Dichtmittels an der Kanalwand ist jedoch aufwändig herzustellen. Ein Verkleben des Dichtmittels erhöht ebenfalls den Herstellungsaufwand und ist im Langzeiteinsatz, insbesondere bei häufigen und starken Temperaturschwankungen wie bei einer in einem Fahrzeug eingesetzten Gasdruckfeder, nicht zuverlässig genug.

Der sekundäre Fluidpfad kommt nicht notwendigerweise jedes Mal, wenn sich das Schaltelement in der Öffnungskonfiguration befindet, zum Tragen, sondern dient als Redundanz um die Zuverlässigkeit der Ventilanordnung zu erhöhen. Es können auch mehrere, beispielsweise zwei, drei, vier oder fünf, Ausnehmungen zur Bereitstellung mehrerer sekundärer Fluidpfade vorgesehen sein, um die Redundanz weiter zu erhöhen. Eine Mehrzahl von Ausnehmungen stellt insbesondere sicher, dass sich die Ventilanordnung auch dann zuverlässige öffnet, wenn eine der Ausnehmungen, beispielsweise durch Schmutzpartikel, verstopft ist.

Um eine gleichmäßige mechanische Belastung und einfache Herstellung der Kanalwand sicherzustellen, ist eine Mehrzahl von Ausnehmungen vorzugsweise gleichmäßig, also mit gleichem Winkelabstand zueinander, um die Bewegungsachse verteilt.

Die zumindest eine Ausnehmung umfasst oder ist vorzugsweise eine Nut zum Fluidtransport entlang der Bewegungsachse in einer um die Bewegungsachse umlaufenden Außenfläche der Kanalwand, wobei die Außenfläche bevorzugt zylindrisch und/oder koaxial zu der Bewegungsachse ist. Als Nut in der Außenfläche lässt sich die Ausnehmung besonders einfach herstellen, insbesondere wenn eine Längsachse der Nut im Wesentlichen parallel zu der Bewegungsachse verläuft.

Die Nut kann dann durch das Dichtmittel verdeckt sein, wenn sich das Dichtmittel in seiner Einbauposition befindet und wird nur dann für einen Fluiddurchfluss freigegeben werden, wenn sich das Dichtmittel aus seiner Einbauposition herausbewegt.

Eine Breite der zumindest einen Ausnehmung in Umfangsrichtung um die Bewegungsachse ist vorzugsweise kleiner als ein Außenradius der zylindrischen Außenfläche der Kanalwand. Dadurch wird sichergestellt, dass die Ausnehmung nicht so groß ist, dass sie eine formschlüssige Halterung des Dichtmittels an der Kanalwand negativ beeinflusst. Vorzugsweise ist der Radius der Außenfläche der Kanalwand einmal bis dreimal so groß, bevorzugter 1,5-mal bis zweimal so groß, besonders bevorzugt 1,7-mal bis 1,8-mal so groß, wie die Breite der Ausnehmung.

In einer weiteren Ausführungsform weist die Ausnehmung die Form eines Kreiszylinderabschnitts auf. Eine kreiszylinderförmige Ausnehmung ist auch bei kompakten Bauteilen verhältnismäßig leicht und mit ausreichend niedrigen Herstellungstoleranzen herzustellen. Gleichzeitig bietet sie keinen zu großen Strömungswiderstand für das Dämpfungsfluid.

Vorzugsweise ist das Dichtmittel relativ zur Kanalwand quer zur Bewegungsachse formschlüssig fixiert, wobei eine Dicke des Dichtmittels entlang der Bewegungsachse in einem unbelasteten Zustand bevorzugt größer als ein Abstand entlang der Bewegungsachse des Schaltelements in der Öffnungskonfiguration von der Durchgangsöffnung ist.

Eine formschlüssige Fixierung quer zur Bewegungsachse, die wesentlich einfacher herzustellen ist, als eine formschlüssige Fixierung entlang der Bewegungsachse, verhindert, dass sich das Dichtmittel unkontrolliert in der Ventilanordnung bewegt. Insbesondere verhindert eine ausreichend große Dicke des Dichtmittels, dass dieses zwischen das Schaltelement und die Durchgangsöffnung gelangt, wo das Dichtmittel die Funktion des Schaltelements blockieren könnte.

Das Dichtmittel kann beispielsweise einen um den entlang der Bewegungsachse verlaufenden Kanalabschnitt umlaufenden, und dadurch quer zur Bewegungsachse formschlüssig fixierten, O-Ring umfassen.

Das Dichtmittel ist vorzugsweise in der Öffnungskonfiguration des Schaltelements relativ zur Kanalwand entlang der Bewegungsachse beweglich. Aufgrund des durch die Ausnehmung bereitgestellten sekundären Fluidpfades ist keine aufwändige Fixierung des Dichtmittels gegen Bewegungen entlang der Bewegungsachse notwendig.

Eine Dicke des Dichtmittels entlang der Bewegungsachse in einem unbelasteten Zustand ist vorzugsweise kleiner als ein Abstand entlang der Bewegungsachse des Schaltelements in der Öffnungskonfiguration von der Dichtfläche, und die Dicke des Dichtmittels ist vorzugsweise größer oder gleich einem Abstand entlang der Bewegungsachse des Schaltelements in der Schließkonfiguration von der Dichtfläche. Durch diese Ausgestaltung kann das Dichtmittel einen Zwischenraum zwischen der Dichtfläche und dem Schaltelement in der Schließkonfiguration dichtend verschließen, und in der Öffnungskonfiguration kann ein erster und/oder zweiter Fluidpfad zwischen dem Dichtmittel und dem Schaltelement und/oder der Dichtfläche zur fluidleitenden Verbindung der beiden Kammern frei bleiben.

Das Schaltelement umfasst oder ist vorzugsweise ein sich bei einer Schalttemperatur zwischen dem Öffnungs-Temperaturbereich und dem Schließtemperatur-Bereich entlang der Bewegungsachse verformendes Bimetall. Ein, insbesondere scheibenförmiges Bimetall, beispielsweise eine Bimetallfeder, stellt eine besonders kostengünstiges, zuverlässiges und wartungsfreies temperaturgetriebenes Schaltelement dar. Die Bimetallfeder kann insbesondere so ausgestaltet und/oder angeordnet sein wie die in der Patentanmeldung DE 11 2006 000 335 T5 beschriebene Bimetallfeder, woraus sich die dort beschriebenen Vorteile ergeben. Die entsprechenden Absätze [0030] bis [0041] sind hier durch Bezugnahme aufgenommen.

Der Kanalabschnitt, die Öffnungsnormale der Durchgangsöffnung und/oder die Flächennormale der Dichtfläche sind vorzugsweise parallel zur Bewegungsachse. Durch eine parallele Ausrichtung einer oder mehrerer, vorzugsweise aller, der vorgenannten Komponenten zu der Bewegungsachse ist die Ventilanordnung besonders einfach herstellbar. Außerdem kann das Dichtmittel bei einer Bewegung des Schaltelements entlang der Bewegungsachse auf die Dichtfläche zu in die Schließkonfiguration besonders zuverlässig mit der Dichtfläche dichtend zusammenwirken.

Die erfindungsgemäße Aufgabe wird durch eine Gasdruckfeder umfassend mindestens zwei voneinander getrennte Kammern zur Aufnahme eines Fluides, gelöst, wobei die Kammern über eine erfindungsgemäße Ventilanordnung miteinander verbunden sind.

Durch die Ventilanordnung kann eine fluidleitende Verbindung zwischen den beiden Kammern auf zuverlässige Weise temperaturgetrieben geöffnet und geschlossen werden, beispielsweise um eine Federkraft der Gasdruckfeder temperaturgesteuert zu erhöhen oder zu verringern.

In einer Ausführungsform ist die Ventilanordnung in einem Öffnungs-Temperaturbereich unterhalb einer Schalttemperatur geöffnet, sodass die mindestens zwei Kammern in Fluidverbindung stehen, und die Ventilanordnung ist in einem Schließ-Temperaturbereich oberhalb der Schalttemperatur geschlossen, sodass die mindestens zwei Kammern fluiddicht voneinander getrennt sind.

Dadurch können die beiden Kammern unterhalb der Schalttemperatur ein gemeinsames wirksames Gasvolumen der Gasdruckfeder bilden, während oberhalb der Schalttemperatur nur eine der Kammern ein das wirksame Gasvolumen der Gasdruckfeder bildet. Somit kann eine Temperaturabhängigkeit der Federkraft der Gasdruckfeder, die normalerweise mit sinkender Temperatur abnimmt, durch Zuschalten der zweiten Kammer unterhalb der Schalttemperatur auf zuverlässige Weise zumindest teilweise kompensiert werden.

### Kurze Beschreibung der Zeichnungen

Weitere Vorteile, Ziele und Eigenschaften der Erfindung werden anhand nachfolgender Beschreibung und anliegender Zeichnungen erläutert, in welchen beispielhaft erfindungsgemäße Gegenstände dargestellt sind. Merkmale, welche in den Figuren wenigstens im Wesentlichen hinsichtlich ihrer Funktion übereinstimmen, können hierbei mit gleichen Bezugszeichen gekennzeichnet sein, wobei diese Merkmale nicht in allen Figuren beziffert und erläutert sein müssen.
Figur 1 zeigt einen Längsschnitt durch eine Ausführungsform einer erfindungsgemäßen Gasdruckfeder;
Figur 2 zeigt einen Längsschnitt einer temperaturgetriebenen Ventilanordnung des Standes der Technik in einer geschlossenen Ventilposition;
Figur 3 zeigt einen Längsschnitt der temperaturgetriebenen Ventilanordnung der Figur 2 des Standes der Technik in einer Öffnungskonfiguration mit dem Dichtmittel in seiner Einbauposition;
Figur 4 zeigt einen Längsschnitt der temperaturgetriebenen Ventilanordnung der Figuren 2 und 3 des Standes der Technik in einer Schließkonfiguration mit dem Dichtmittel in einer Betriebsposition;
Figur 5 zeigt einen Längsschnitt einer Ausführungsform einer temperaturgetriebenen Ventilanordnung für eine Gasdruckfeder gemäß der Erfindung in einer Schließkonfiguration
Figur 6 zeigt einen Längsschnitt der temperaturgetriebenen Ventilanordnung der Figur 5 gemäß der Erfindung in einer Öffnungskonfiguration mit dem Dichtmittel in seiner Einbauposition;
Figur 7 zeigt einen Längsschnitt der temperaturgetriebenen Ventilanordnung der Figuren 5 und 6 gemäß der Erfindung in einer Öffnungskonfiguration mit dem Dichtmittel in einer Betriebsposition;
Figur 8 zeigt einen Querschnitt des Kanalabschnitts einer Ausführungsform einer erfindungsgemäßen Gasdruckfeder mit der temperaturgetriebenen Ventilanordnung.

### Fig.1

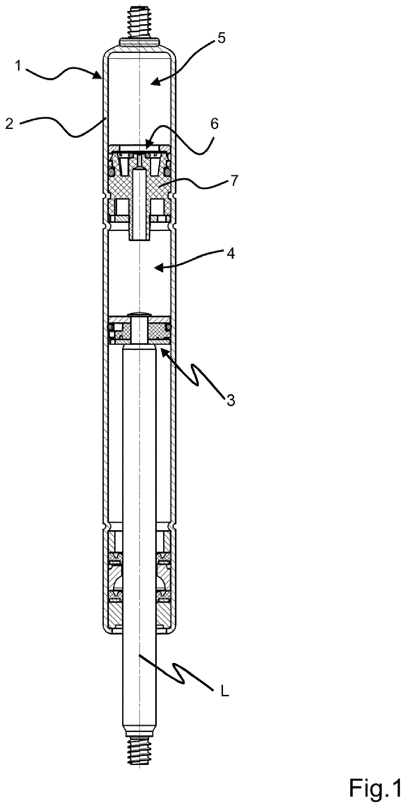

Figur 1 zeigt eine Ausführungsform einer erfindungsgemäßen Gasdruckfeder 1 im Längsschnitt entlang einer Längsachse L der Gasdruckfeder. Die Gasdruckfeder umfasst ein Gehäuse 2 und einen in dem Gehäuse 2 entlang der Längsachse L der Gasdruckfeder 1 verschiebbaren Kolben 3. Die Gasdruckfeder 1 umfasst weiterhin zwei Kammern 4, 5 sowie eine temperaturgetrieben Ventilanordnung 6 mit einem Ventilkörper 7. Je nach Temperatur der temperaturgetrieben Ventilanordnung 6 stellt diese eine fluidleitende Verbindung zwischen einer Hauptkammer 4 und einer Nebenkammer 5 her oder nicht.

In einem Schließ-Temperaturbereich, beispielsweise bei Temperaturen oberhalb von 4°C, ist die Ventilanordnung geschlossen, und die Gasdruckfeder 1 arbeitet nur unter Verwendung der Hauptkammer 4. Die Gasdruckfeder 1 bietet dann eine Kraftabgabe, die auf der in der Hauptkammer 4 enthaltenen Gasmasse und dem Gasvolumen basiert.

In einem Öffnungs-Temperaturbereich, beispielsweise unterhalb von 4°C, öffnet sich die temperaturgetriebene Ventilanordnung 6, sodass die Gasdruckfeder 1 beide Kammern 4, 5 verwendet und eine Kraftabgabe liefert, die auf dem Gesamt-Gasvolumen beider Kammern 4, 5 basiert. Die Verbindung von Hauptkammer 4 und Nebenkammer 5 liefert somit eine erhöhte Kraftabgabe im Öffnungs-Temperaturbereich.

Im Resultat kann damit die Temperaturabhängigkeit der Gasdruckfederkraft reduziert werden, sodass eine ausreichend große Kraft bei niedrigen Temperaturen geliefert wird, und eine nicht zu große Kraft bei hohen Temperaturen erreicht wird.

### Fig.2

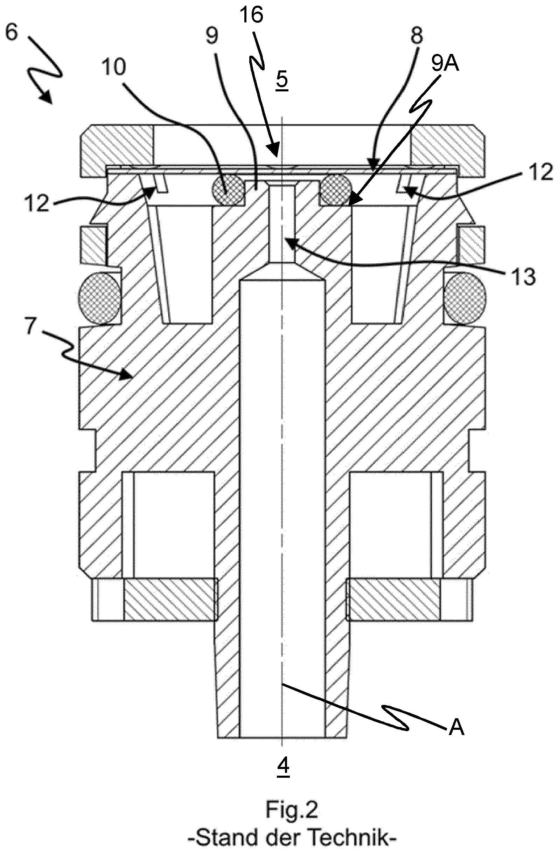

Die Figuren 2 bis 4 zeigen eine bekannte temperaturgetriebene Ventilanordnung 6 des Standes der Technik jeweils im Längsschnitt entlang einer Bewegungsachse A des Schaltelements 8 der Ventilanordnung 6. Die Ventilanordnung 6 umfasst ein Schaltelement 8, beispielsweise eine Bimetallfeder, die zumindest abschnittsweise entlang der Bewegungsachse A temperaturgetrieben mit einer Öffnungskonfiguration bei einer Öffnungstemperatur und einer Schließkonfiguration bei einer Schließtemperatur beweglich ist.

In einem in eine Gasdruckfeder 1 eingebauten Zustand kann die Bewegungsachse A beispielsweise mit der Längsachse L der Gasdruckfeder 1 zusammenfallen, und die Ventilanordnung 6 kann beispielsweise zwischen einer Hauptkammer 4, in der Figur zum Beispiel unterhalb der Ventilanordnung 6, und einer Nebenkammer 5, in der Figur zum Beispiel oberhalb der Ventilanordnung 6, angeordnet sein.

In der in Figur 2 dargestellten Schließkonfiguration wirkt das Schaltelement 8 mit einem um eine Durchgangsöffnung16 eines Kanalabschnitts 13 der Ventilanordnung 6 herum angeordneten Dichtmittel 10, beispielsweise einem O-Ring, und einer, beispielsweise zur Bewegungsachse A orthogonalen, Dichtfläche 9A einer Kanalwand 9 des Kanalabschnitts dichtend zusammen. In der Schließkonfiguration bildet das Dichtmittel somit eine Dichtung, die die Durchgangsöffnung 16 fluiddicht verschließt und beispielsweise die Hauptkammer 4 von der Nebenkammer 5 einer Gasdruckfeder 1 trennt.

### Fig.3

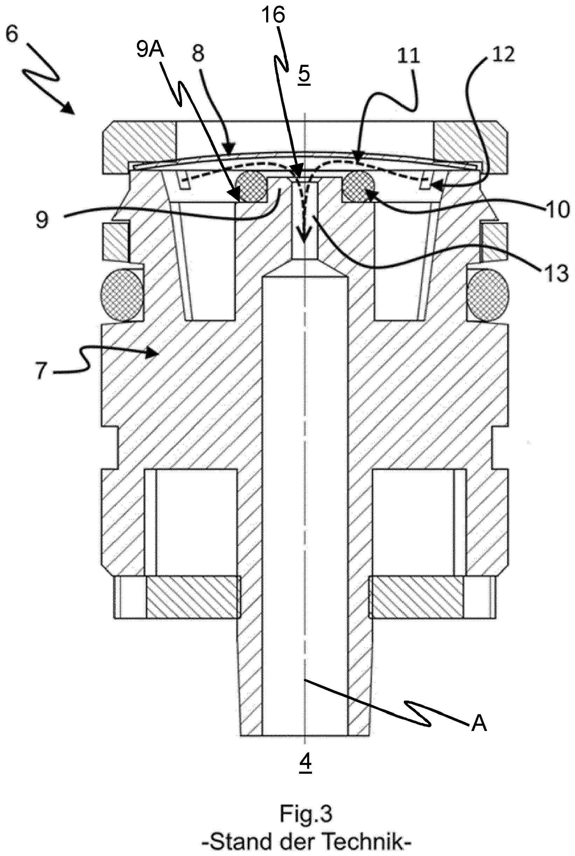

Figur 3 zeigt die temperaturgetriebene Ventilanordnung 6 aus Figur 2 mit dem Schaltelement 8 in seiner Öffnungskonfiguration. Beispielsweise unterhalb einer Schalttemperatur (z.B. 4°C) bewegt sich das Schaltelement 8 abschnittsweise entlang der Bewegungsachse A von der Dichtfläche 9A weg, beispielsweise wölbt sich eine Bimetallfeder von der Dichtfläche 9A weg, und öffnet dadurch einen primären Fluidpfad 11 zwischen dem in seiner Einbauposition verbleibenden Dichtmittel 10 und dem Schaltelement 8 hindurch.

Der primäre Fluidpfad 11 führt beispielsweise durch eine Anzahl von Einlässen 12 in die Ventilanordnung 6 hinein und durch die Durchgangsöffnung 16 und den Kanalabschnitt 13, beispielsweise auf einer entlang der Bewegungsachse A gegenüberliegenden Seite der Ventilanordnung 6, aus der Ventilanordnung 6 hinaus und verbindet beispielsweise die Hauptkammer 4 mit der Nebenkammer 5 einer Gasdruckfeder 1.

### Fig.4

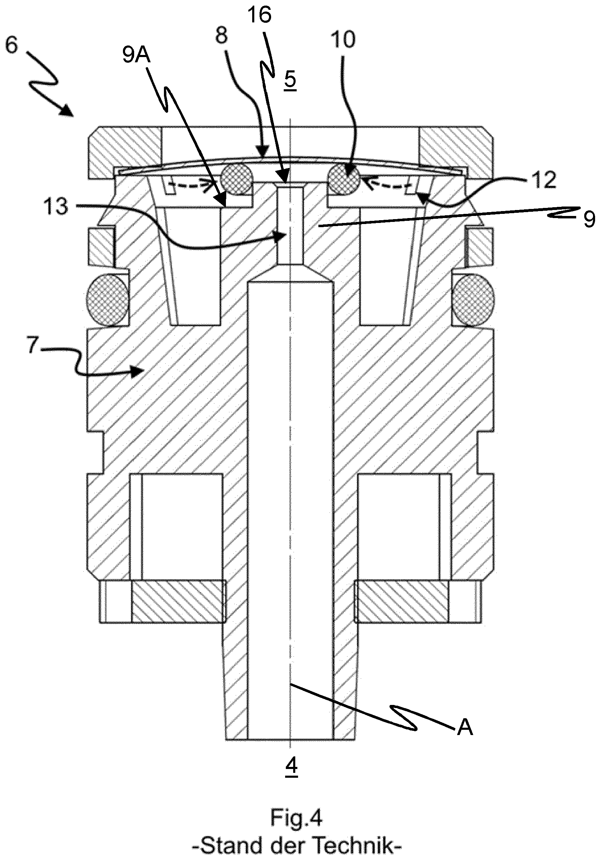

Figur 4 zeigt wie Figur 3 ebenfalls die Ventilanordnung 6 mit dem Schaltelement 8 in seiner Öffnungskonfiguration, bei der sich das Schaltelement 8 gegenüber der Schließkonfiguration abschnittsweise entlang der Bewegungsachse A von der Dichtfläche 9A entfernt hat. Das Dichtmittel 10 hat sich jedoch mit dem Schaltelement 8 aus seiner Einbauposition entlang der Bewegungsachse A in eine von der Dichtfläche 9A beabstandete Betriebsposition bewegt und liegt weiterhin dichtend an dem Schaltelement 8 an, sodass kein Fluidfluss von den Einlässen 12 zum Kanalabschnitt 13 möglich ist. Im Resultat ist die Ventilanordnung 6 für ein Fluid geschlossen, obwohl sich das Schaltelement 8 in seiner Öffnungskonfiguration befindet.

### Fig.5

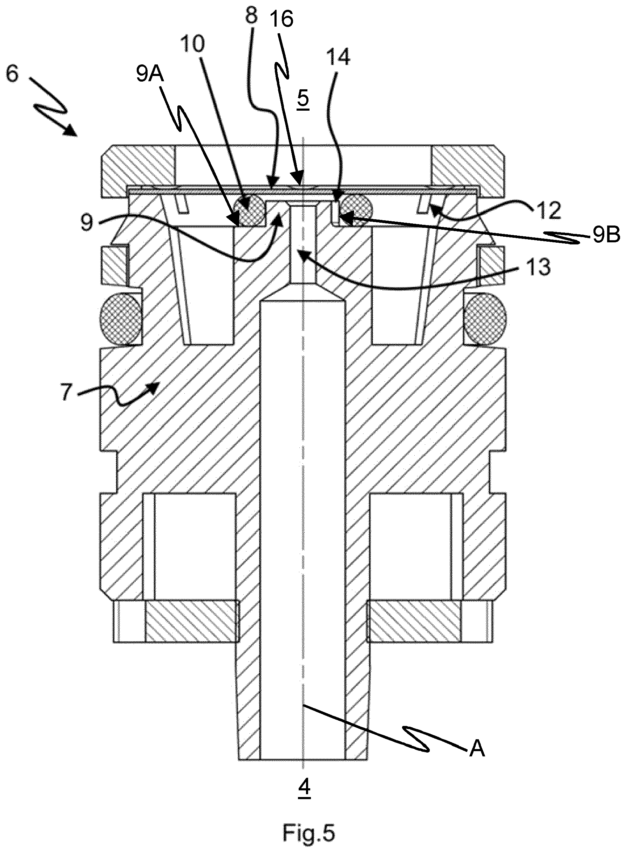

Die Figuren 5 bis 7 zeigen eine Ausführungsform einer temperaturgetriebenen Ventilanordnung 6 einer erfindungsgemäßen Gasdruckfeder jeweils im Längsschnitt entlang einer Bewegungsachse A eines Schaltelements 8 der Ventilanordnung.

Die Ventilanordnung 6 umfasst ein Schaltelement 8, beispielsweise eine Bimetallfeder, die zumindest abschnittsweise entlang der Bewegungsachse A temperaturgetrieben mit einer Öffnungskonfiguration bei einer Öffnungstemperatur und einer Schließkonfiguration bei einer Schließtemperatur beweglich ist.

In einem in eine Gasdruckfeder 1 eingebauten Zustand kann die Bewegungsachse A beispielsweise mit der Längsachse L der Gasdruckfeder 1 zusammenfallen, und die Ventilanordnung 6 kann beispielsweise zwischen einer Hauptkammer 4, in Figur 5 zum Beispiel unterhalb der Ventilanordnung 6, und einer Nebenkammer 5, in Figur 5 zum Beispiel oberhalb der Ventilanordnung 6, angeordnet sein.

In der in Figur 5 dargestellten Schließkonfiguration wirkt das Schaltelement 8 mit einem um eine Durchgangsöffnung 16 eines Kanalabschnitts 13 der Ventilanordnung 6 herum angeordneten Dichtmittel 10, beispielsweise einem O-Ring, und einer, beispielsweise zur Bewegungsachse A orthogonalen, Dichtfläche 9A einer Kanalwand 9 des Kanalabschnitts 13 dichtend zusammen. In der Schließkonfiguration bildet das Dichtmittel somit eine Dichtung, die die Durchgangsöffnung 16 fluiddicht verschließt und beispielsweise die Hauptkammer 4 von der Nebenkammer 5 einer Gasdruckfeder 1 trennt.

In der Kanalwand 9, beispielsweise in einer, insbesondere zylindrischen und zur Bewegungsachse A koaxialen, Außenfläche 9B der Kanalwand 9, ist eine Ausnehmung 14, beispielsweise eine Nut zum Fluidtransport entlang der Bewegungsachse A, angeordnet. Die Ausnehmung befindet sich beispielsweise bezüglich der Bewegungsachse A vollständig radial innerhalb des Dichtmittels 10 in seiner Einbauposition. Die Ausnehmung 14 beeinträchtigt also nicht die Dichtigkeit der Ventilanordnung 6 in der gezeigten Schließkonfiguration.

### Fig.6

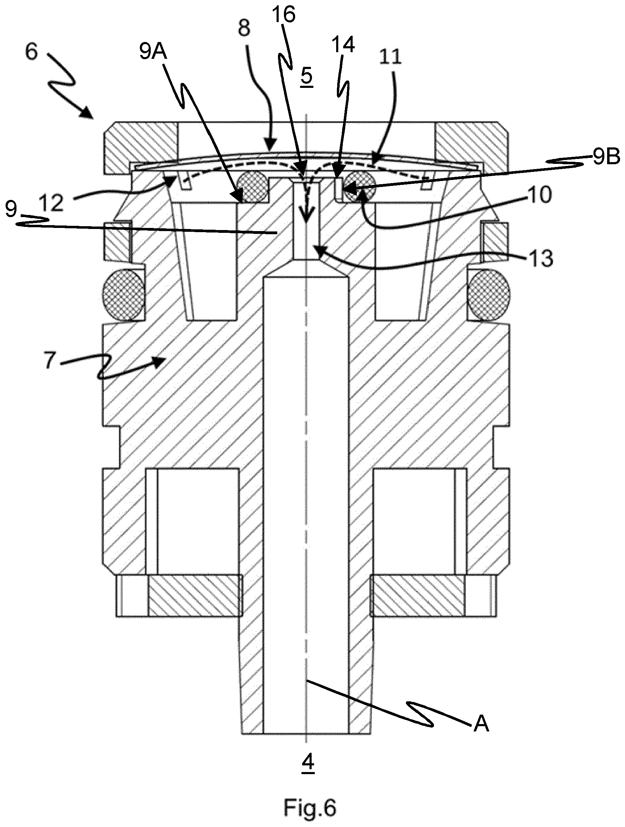

Figur 6 zeigt die temperaturgetriebene Ventilanordnung 6 aus Figur 5 mit dem Schaltelement 8 in seiner Öffnungskonfiguration. Beispielsweise unterhalb einer Schalttemperatur (z.B. 4°C) bewegt sich das Schaltelement 8 abschnittsweise entlang der Bewegungsachse A von der Dichtfläche 9A weg, beispielsweise wölbt sich eine Bimetallfeder von der Dichtfläche 9A weg, und öffnet dadurch einen primären Fluidpfad 11 zwischen dem in seiner Einbauposition verbleibenden Dichtmittel 10 und dem Schaltelement 8 hindurch.

Der primäre Fluidpfad 11 führt beispielsweise durch eine Anzahl von Einlässen 12 in die Ventilanordnung 6 hinein und durch die Durchgangsöffnung 16 und den Kanalabschnitt 13, beispielsweise auf einer entlang der Bewegungsachse A gegenüberliegenden Seite der Ventilanordnung 6, aus der Ventilanordnung 6 hinaus und verbindet beispielsweise die Hauptkammer 4 mit der Nebenkammer 5 einer Gasdruckfeder 1.

Die Ausnehmung 14 hat keinen wesentlichen Einfluss auf das Durchflussverhalten in dieser Konfiguration der Ventilanordnung 6.

### Fig.7

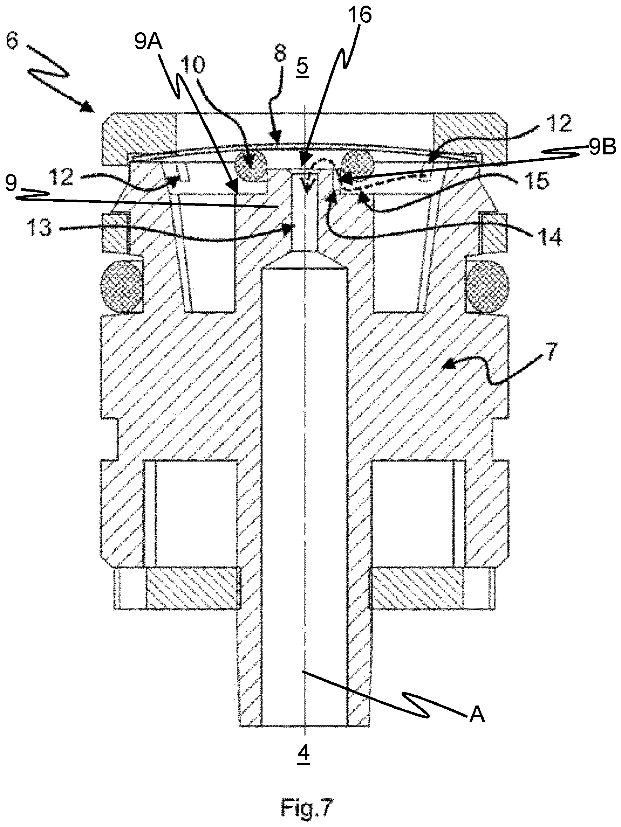

Figur 7 zeigt wie Figur 6 ebenfalls die Ventilanordnung 6 mit dem Schaltelement 8 in seiner Öffnungskonfiguration, bei der sich das Schaltelement 8 gegenüber der Schließkonfiguration abschnittsweise entlang der Bewegungsachse A von der Dichtfläche 9A entfernt hat. Das Dichtmittel 10 hat sich jedoch mit dem Schaltelement 8 aus seiner Einbauposition entlang der Bewegungsachse A in eine von der Dichtfläche 9A beabstandete Betriebsposition bewegt und liegt weiterhin dichtend an dem Schaltelement 8 an, sodass wie in der in Figur 4 gezeigten analogen Konfiguration einer Ventilanordnung 6 aus dem Stand der Technik kein Fluidfluss über den primären Fluidpfad 11 zwischen dem Schaltelement 8 und dem Dichtmittel 10 hindurch möglich ist.

Anders als im Stand der Technik ist in der in Figur 7 dargestellten Konfiguration der erfindungsgemäßen Ventilanordnung 6 aber ein sekundärer Fluidpfad 15 durch die Ausnehmung 14 geöffnet. Der sekundäre Fluidpfad 15 führt beispielsweise ebenso wie der primäre Fluidpfad 11 durch eine Anzahl von Einlässen 12 in die Ventilanordnung 6 hinein und durch die Durchgangsöffnung 16 und den Kanalabschnitt 13, beispielsweise auf einer entlang der Bewegungsachse A gegenüberliegenden Seite der Ventilanordnung 6, aus der Ventilanordnung 6 hinaus und verbindet beispielsweise die Hauptkammer 4 mit der Nebenkammer 5 einer Gasdruckfeder 1.

Der sekundäre Fluidpfad 15 öffnet sich vorzugsweise nur dann, wenn sich das Schaltelement 8 in einer Öffnungskonfiguration befindet und das Dichtmittel 10 sich mit dem Schaltelement 8 aus seiner Einbauposition entlang der Bewegungsachse A in eine Betriebsposition bewegt hat, insbesondere so dass der primäre Fluidpfad 11 verschlossen bleibt.

### Fig.8

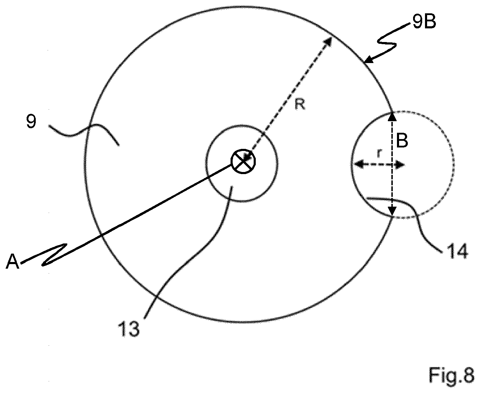

Figur 8 zeigt einen Querschnitt einer Kanalwand 9 einer Ausführungsform einer erfindungsgemäßen Gasdruckfeder mit der temperaturgetriebenen Ventilanordnung 6. Die Ausnehmung 14 der Ventilanordnung 6 ist beispielsweise eine Nut zum Fluidtransport entlang der Bewegungsachse A des Schaltelements 8 der Ventilanordnung 6, wobei die Ausnehmung 14 in einer, beispielsweise zylindrischen und zur Bewegungsachse koaxialen, Außenfläche 9B der Kanalwand 9 angeordnet ist.

Die Ausnehmung 14 hat eine Breite B in Umfangsrichtung um die Bewegungsachse A und weist beispielsweise die Form eines Kreiszylinderabschnitts mit einem Krümmungsradius r auf. Der Außenradius R der Außenfläche 9B ist größer als die Breite B der Ausnehmung 14, beispielsweise 1,5-mal bis zweimal so groß wie die Breite B. Dadurch wird sichergestellt, dass die Ausnehmung 14 die Halterung eines um die Außenfläche 9B umlaufenden Dichtmittels (nicht dargestellt) der Ventilanordnung 6 nicht beeinträchtigt.

### Liste der Bezugszeichen

| | | | |
|---|---|---|---|
| 1 | Gasdruckfeder | 11 | primärer Fluidpfad |
| 2 | Gehäuse | 12 | Einlass |
| 3 | Kolben | 13 | Kanalabschnitt |
| 4 | Hauptkammer | 14 | Ausnehmung |
| 5 | Nebenkammer | 15 | sekundärer Fluidpfad |
| 6 | Ventilanordnung | 16 | Durchgangsöffnung |
| 7 | Ventilkörper | A | Bewegungsachse |
| 8 | Schaltelement | B | Breite |
| 9 | Kanalwand | L | Längsachse |
| 9A | Dichtfläche | r | Krümmungsradius |
| 9B | Außenfläche | R | Außenradius |
| 10 | Dichtmittel | | |

## Patentansprüche

1. Gasdruckfeder (1), umfassend zwei voneinander getrennte Kammern (4, 5) zur Aufnahme eines Fluides,
**dadurch gekennzeichnet, dass**
die Kammern (4, 5) über eine temperaturgetriebene Ventilanordnung (6) miteinander verbunden sind, die Ventilanordnung (6) umfassend
a) einen Kanalabschnitt (13) zur fluidleitenden Verbindung der zwei Kammern (4, 5) mit einer Durchgangsöffnung (16) für das Fluid,
b) zumindest ein Schaltelement (8) mit einer Öffnungskonfiguration in einem Öffnungs-Temperaturbereich und einer Schließkonfiguration in einem Schließ-Temperaturbereich,
b1) wobei das Schaltelement (8) zumindest abschnittsweise temperaturgetrieben entlang einer Bewegungsachse (A) relativ zu dem Kanalabschnitt (13) beweglich ist,
b2) wobei eine Öffnungsnormale der Durchgangsöffnung (16) auf das Schaltelement (8) ausgerichtet ist, und
b3) wobei der Kanalabschnitt (13) um die Bewegungsachse (A) umlaufend von einer Kanalwand (9) umschlossen ist, und
c) zumindest ein um die Kanalwand (9) umlaufendes Dichtmittel (10),
c1) wobei das Dichtmittel (10) in einer Einbauposition an zumindest einer Dichtfläche (9A) der Kanalwand (9) anliegt, wobei eine Flächennormale der Dichtfläche (9A) auf das Schaltelement (8) ausgerichtet ist,
c2) wobei das zumindest eine Dichtmittel (10) in der Einbauposition mit der zumindest einen Dichtfläche (9A) und dem zumindest einen Schaltelement (8) in der Schließkonfiguration dichtend zusammenwirkt und die Durchgangsöffnung (16) verschließt, und
c3) wobei das zumindest eine Dichtmittel (10) in der Einbauposition von dem zumindest einen Schaltelement (8) in der Öffnungskonfiguration entlang der Bewegungsachse (A) beabstandet ist, sodass ein primärer Fluidpfad (11) die zwei Kammern (4, 5) durch die Durchgangsöffnung (16) und zwischen dem zumindest einen Schaltelement (8) und dem zumindest einen Dichtmittel (10) hindurch fluidleitend verbindet,
**gekennzeichnet durch**
d) zumindest eine Ausnehmung (14) in der Kanalwand (9),
d1) wobei eine Projektion der zumindest einen Ausnehmung (14) entlang der Bewegungsachse (A), insbesondere vollständig, von einer Projektion der Dichtfläche (9A) entlang der Bewegungsachse (A) umschlossen ist, und
d2) wobei in einer Betriebsposition des Dichtmittels (10), in der das Dichtmittel (10) von der zumindest einen Dichtfläche (9A) entlang der Bewegungsachse (A) beabstandet ist, ein sekundärer Fluidpfad (15) die beiden Kammern (4, 5) durch die zumindest eine Ausnehmung (14) fluidleitend miteinander verbindet.

2. Gasdruckfeder (1) nach Anspruch 1,
**dadurch gekennzeichnet, dass**
die zumindest eine Ausnehmung (14) eine Nut zum Fluidtransport entlang der Bewegungsachse (A) in einer um die Bewegungsachse (A) umlaufenden Außenfläche (9B) der Kanalwand (9) umfasst, wobei die Außenfläche (9B) bevorzugt zylindrisch und/oder koaxial zu der Bewegungsachse (A) ist.

3. Gasdruckfeder (1) nach Anspruch 2,
**dadurch gekennzeichnet, dass**
eine Breite (B) der zumindest einen Ausnehmung (14) in Umfangsrichtung um die Bewegungsachse (A) kleiner ist als ein Außenradius (R) der zylindrischen Außenfläche (9B) der Kanalwand (9).

4. Gasdruckfeder (1) nach einem der vorstehenden Ansprüche,
**dadurch gekennzeichnet, dass**
das Dichtmittel (10) relativ zur Kanalwand (9) quer zur Bewegungsachse (A) formschlüssig fixiert ist, wobei eine Dicke des Dichtmittels (10) entlang der Bewegungsachse in einem unbelasteten Zustand bevorzugt größer als ein Abstand entlang der Bewegungsachse des Schaltelements (8) in der Öffnungskonfiguration von der Durchgangsöffnung (16) ist.

5. Gasdruckfeder (1) nach einem der vorstehenden Ansprüche,
**dadurch gekennzeichnet, dass**
das Dichtmittel (10) in der Öffnungskonfiguration des Schaltelements (8) relativ zur Kanalwand (9) entlang der Bewegungsachse (A) beweglich ist.

6. Gasdruckfeder (1) nach einem der vorstehenden Ansprüche,
**dadurch gekennzeichnet, dass**
a) eine Dicke des Dichtmittels (10) entlang der Bewegungsachse in einem unbelasteten Zustand kleiner als ein Abstand entlang der Bewegungsachse des Schaltelements (8) in der Öffnungskonfiguration von der Dichtfläche (9A) ist, und
b) die Dicke des Dichtmittels (10) größer oder gleich einem Abstand entlang der Bewegungsachse des Schaltelements (8) in der Schließkonfiguration von der Dichtfläche (9A) ist.

7. Gasdruckfeder (1) nach einem der vorstehenden Ansprüche,
**dadurch gekennzeichnet, dass**
das Schaltelement ein sich bei einer Schalttemperatur zwischen dem Öffnungs-Temperaturbereich und dem Schließtemperatur-Bereich entlang der Bewegungsachse (A) verformendes Bimetall umfasst.

8. Gasdruckfeder (1) nach einem der vorstehenden Ansprüche,
**dadurch gekennzeichnet, dass**
der Kanalabschnitt (13), die Öffnungsnormale der Durchgangsöffnung (16) und/oder die Flächennormale der Dichtfläche (9A) parallel zur Bewegungsachse (A) sind.

9. Gasdruckfeder (1) nach einem der vorstehenden Ansprüche,
**dadurch gekennzeichnet, dass**
a) die Ventilanordnung (6) in einem Öffnungs-Temperaturbereich unterhalb einer Schalttemperatur geöffnet ist, sodass die zwei Kammern (4, 5) in Fluidverbindung stehen, und
b) die Ventilanordnung (6) in einem Schließ-Temperaturbereich oberhalb der Schalttemperatur geschlossen ist, sodass die zwei Kammern (4, 5) fluiddicht voneinander getrennt sind

## Claims

1. A gas pressure spring (1) comprising two separated chambers (4, 5) for accommodating a fluid,
**characterised in that**
the chambers (4, 5) are connected to each other via a valve assembly (6), the valve assembly (6) comprising
a) a channel portion (13) for the fluid-conducting connection of the two chambers (4, 5) for accommodating a fluid having a through opening (16) for the fluid,
b) at least one switching element (8) having an opening configuration in an opening temperature range and a closing configuration in a closing temperature range,
b1) wherein the switching element (8) is, at least in sections, movable relative to the channel portion (13) along an axis of movement (A) in a temperature-driven manner,
b2) wherein an opening normal of the through opening (16) is oriented towards the switching element (8), and
b3) wherein the channel portion (13) is circumferentially enclosed by a channel wall (9) around the axis of movement (A), and
c) at least one sealing means (10) circumferentially extending around the channel wall (9),
c1) wherein the sealing means (10), in a mounting position, abuts on at least one sealing surface (9A) of the channel wall (9), a surface normal of the sealing surface (9A) being oriented towards the switching element (8),
c2) wherein the at least one sealing means (10), in the mounting position, cooperates in a sealing manner with the at least one sealing surface (9A) and with the at least one switching element (8) in the closing configuration and closes the through opening (16), and
c3) wherein the at least one sealing means (10), in the mounting position, is spaced apart from the at least one switching element (8) in the opening configuration along the axis of movement (A) so that a primary fluid path (11) connects the two chambers (4, 5) through the through opening (16) and between the at least one switching element (8) and the at least one sealing means (10) in a fluid-conducting manner,
**characterised by**
d) at least one recess (14) in the channel wall (9),
d1) wherein a projection of the at least one recess (14) along the axis of movement (A) is, particularly fully, enclosed by a projection of the sealing surface (9A) along the axis of movement (A), and
d2) wherein, in an operating position of the sealing means (10) in which the sealing means (10) is spaced apart from the at least one sealing surface (9A) along the axis of movement (A), a secondary fluid path (15) connects the two chambers (4, 5) to each other in a fluid-conducting manner through the at least one recess (14).

2. The gas pressure spring (1) according to claim 1,
**characterised in that**
the at least one recess (14) comprises a groove for a fluid transport along the axis of movement (A) in an outer surface (9B) of the channel wall (9) circumferentially extending around the axis of movement (A), the outer surface (9B) preferably being cylindrical and/or coaxial to the axis of movement (A).

3. The gas pressure spring (1) according to claim 2,
**characterised in that**
a width (B) of the at least one recess (14) in the circumferential direction around the axis of movement (A) is smaller than an outer radius (R) of the cylindrical outer surface (9B) of the channel wall (9).

4. The gas pressure spring (1) according to one of the preceding claims,
**characterised in that**
the sealing means (10) is positively fixed transverse to the axis of movement (A) relative to the channel wall (9), a thickness of the sealing means (10) along the axis of movement (A) in an unloaded state preferably being larger than a distance along the axis of movement of the switching element (8) in the opening configuration from the through opening (16).

5. The gas pressure spring (1) according to one of the preceding claims,
**characterised in that**
the sealing means (10) is movable relative to the channel wall (9) along the axis of movement (A) in the opening configuration of the switching element (8).

6. The gas pressure spring (1) according to one of the preceding claims,
**characterised in that**
a) a thickness of the sealing means (10) along the axis of movement (A) in an unloaded state is smaller than a distance along the axis of movement of the switching element (8) in the opening configuration from the sealing surface (9A), and
b) the thickness of the sealing means (10) is larger than or equal to a distance along the axis of movement of the switching element (8) in the closing configuration from the sealing surface (9A).

7. The gas pressure spring (1) according to one of the preceding claims,
**characterised in that**
the switching element comprises a bimetal deforming along the axis of movement (A) at a switching temperature between the opening temperature range and the closing temperature range.

8. The gas pressure spring (1) according to one of the preceding claims,
**characterised in that**
the channel portion (13), the opening normal of the through opening (16), and/or the surface normal of the sealing surface (9B) are parallel to the axis of movement (A).

9. The gas pressure spring (1) according to one of the preceding claims,
**characterised in that**
a) the valve assembly (6) is opened in an opening temperature range below a switching temperature so that the two chambers (4, 5) are in fluid connection, and
b) the valve assembly (6) is closed in a closing temperature range above the switching temperature so that the two chambers (4, 5) are separated from each other in a fluid-tight manner.

## Revendications

1. Ressort à pression de gaz (1), comprenant deux chambres (4, 5) séparées l'une de l'autre pour recevoir un fluide,
**caractérisé en ce que**
les chambres (4, 5) sont reliées l'une à l'autre par l'intermédiaire d'un agencement de soupape (6) commandé par la température, l'agencement de soupape (6) comprenant
a) une section de canal (13) pour la liaison conductrice de fluide des deux chambres (4, 5) avec une ouverture de passage (16) pour le fluide,
b) au moins un élément de commutation (8) avec une configuration d'ouverture dans une plage de température d'ouverture et une configuration de fermeture dans une plage de température de fermeture,
b1) l'élément de commutation (8) étant mobile, au moins par sections, sous l'effet de la température, le long d'un axe de déplacement (A) par rapport à la section de canal (13),
b2) une normale d'ouverture de l'ouverture de passage (16) étant orientée vers l'élément de commutation (8), et
b3) la section de canal (13) étant entourée d'une paroi de canal (9) sur tout le pourtour de l'axe de déplacement (A), et
c) au moins un moyen d'étanchéité (10) sur tout le pourtour de la paroi de canal (9),
c1) le moyen d'étanchéité (10) s'appliquant, dans une position de montage, contre au moins une surface d'étanchéité (9A) de la paroi de canal (9), une normale de la surface d'étanchéité (9A) étant orientée vers l'élément de commutation (8),
c2) ledit au moins un moyen d'étanchéité (10) coopérant de manière étanche, dans la position de montage, avec ladite au moins une surface d'étanchéité (9A) et avec ledit au moins un élément de commutation (8) dans la configuration de fermeture et obturant l'ouverture de passage (16), et
c3) dans lequel ledit au moins un moyen d'étanchéité (10), dans la position de montage, est espacé dudit au moins un élément de commutation (8) dans la configuration d'ouverture le long de l'axe de déplacement (A), de sorte qu'un chemin de fluide primaire (11) relie de manière fluidique les deux chambres (4, 5) à travers l'ouverture de passage (16) et entre ledit au moins un élément de commutation (8) et ledit au moins un moyen d'étanchéité (10),
**caractérisé par**
d) au moins un évidement (14) dans la paroi de canal (9),
d1) une projection dudit au moins un évidement (14) le long de l'axe de déplacement (A) étant entourée, en particulier complètement, par une projection de la surface d'étanchéité (9A) le long de l'axe de déplacement (A), et
d2) dans une position de fonctionnement du moyen d'étanchéité (10), dans laquelle le moyen d'étanchéité (10) est espacé de ladite au moins une surface d'étanchéité (9A) le long de l'axe de déplacement (A), un chemin de fluide secondaire (15) relie les deux chambres (4, 5) l'une à l'autre par conduction de fluide à travers ledit au moins un évidement (14).

2. Ressort à pression de gaz (1) selon la revendication 1,
**caractérisé en ce que**
ledit au moins un évidement (14) comprend une rainure pour le transport de fluide le long de l'axe de mouvement (A) dans une surface extérieure (9B) de la paroi de canal (9) qui entourne l'axe de mouvement (A), la surface extérieure (9B) étant de préférence cylindrique et/ou coaxiale à l'axe de mouvement (A).

3. Ressort à pression de gaz (1) selon la revendication 2,
**caractérisé en ce que**
une largeur (B) dudit au moins un évidement (14) dans la direction circonférentielle autour de l'axe de déplacement (A) est inférieure à un rayon extérieur (R) de la surface extérieure (9B) cylindrique de la paroi de canal (9).

4. Ressort à pression de gaz (1) selon l'une des revendications précédentes,
**caractérisé en ce que**
le moyen d'étanchéité (10) est fixé par complémentarité de forme par rapport à la paroi de canal (9) transversalement à l'axe de déplacement (A), une épaisseur du moyen d'étanchéité (10) le long de l'axe de déplacement, dans un état non sollicité, étant de préférence supérieure à une distance le long de l'axe de déplacement de l'élément de commutation (8), dans la configuration d'ouverture, à l'ouverture de passage (16).

5. Ressort à pression de gaz (1) selon l'une des revendications précédentes,
**caractérisé en ce que**
le moyen d'étanchéité (10) est mobile par rapport à la paroi du canal (9) le long de l'axe de déplacement (A) dans la configuration d'ouverture de l'élément de commutation (8).

6. Ressort à pression de gaz (1) selon l'une des revendications précédentes,
**caractérisé en ce que**
a) une épaisseur du moyen d'étanchéité (10) le long de l'axe de déplacement, dans un état non sollicité, est inférieure à une distance le long de l'axe de déplacement de l'élément de commutation (8), dans la configuration d'ouverture, à la surface d'étanchéité (9A), et
b) l'épaisseur du moyen d'étanchéité (10) est supérieure ou égale à une distance le long de l'axe de déplacement de l'élément de commutation (8), dans la configuration de fermeture, à la surface d'étanchéité (9A).

7. Ressort à pression de gaz (1) selon l'une des revendications précédentes,
**caractérisé en ce que**
l'élément de commutation (8) comprend un bilame se déformant le long de l'axe de déplacement (A) à une température de commutation comprise entre la plage de température d'ouverture et la plage de température de fermeture.

8. Ressort à pression de gaz (1) selon l'une des revendications précédentes,
**caractérisé en ce que**
la section de canal (13), la normale de l'ouverture de l'ouverture de passage (16) et/ou la normale de surface de la surface d'étanchéité (9A) sont parallèles à l'axe de déplacement (A).

9. Ressort à pression de gaz (1) selon l'une des revendications précédentes,
**caractérisé en ce que**
a) l'agencement de soupape (6) est ouvert dans une plage de température d'ouverture inférieure à une température de commutation, de sorte que les deux chambres (4, 5) sont en communication fluidique, et
b) l'agencement de soupape (6) est fermé dans une plage de température de fermeture supérieure à la température de commutation, de sorte que les deux chambres (4, 5) sont séparées l'une de l'autre de manière étanche aux fluides.
